# EUROPÄISCHE PATENTSCHRIFT

(11) **EP 3 540 908 B1**
(45) Veröffentlichungstag und Bekanntmachung des Hinweises auf die Patenterteilung: **05.04.2023**
(21) Anmeldenummer: 19162122.6
(22) Anmeldetag: 12.03.2019
(51) Int. Cl.: H02J 9/06, H01M 8/04828, C25B 15/02

(54) **VERFAHREN ZUR UNTERBRECHUNGSFREIEN STROMVERSORGUNG MITTELS EINER SCHNELLBEREITSCHAFTSANLAGE SOWIE SCHNELLBEREITSCHAFTSANLAGE**
METHOD FOR UNINTERRUPTIBLE POWER SUPPLY USING A QUICK STAND-BY SYSTEM AND QUICK STAND-BY SYSTEM
PROCÉDÉ D'ALIMENTATION ÉLECTRIQUE SANS INTERRUPTION AU MOYEN D'UNE INSTALLATION À DISPONIBILITÉ RAPIDE, AINSI QU'INSTALLATION À DISPONIBILITÉ RAPIDE

(30) Priorität: 12.03.2018 DE 102018105643
(43) Veröffentlichungstag der Anmeldung: 18.09.2019
(73) Patentinhaber: Harzfeld, Edgar, 18435 Stralsund (DE)
(72) Erfinder: Harzfeld, Edgar, 18435 Stralsund (DE)
(74) Vertreter: Grünbaum, Annekathrin

(56) Entgegenhaltungen:
- DE-U1-202010 012 734
- US-A1- 2003 072 977
- US-A1- 2004 247 961
- US-A1- 2013 187 448
- US-A1- 2013 293 015

## Beschreibung

Die Erfindung ist im Bereich der Energieversorgung einzuordnen und dient der Herstellung einer unterbrechungsfreien Stromversorgung im Falle eines Netzausfalls.

Schnellbereitschaftsanlagen werden zur Vermeidung von Stromausfällen innerhalb sensibler Verbrauchergruppen eingesetzt. Hierzu zählen insbesondere Wohngebiete, Industrieparks, Schulen, Krankenhäuser, Lebensmittelmärkte, Kühlhäuser, Sportstadien, Flug- und Schiffshäfen, Wasserversorgungsanlagen, Wind- und Solarparks und Altenheime. Diese Verbraucher besitzen in der Regel ein Notstromaggregat, das mit einem Dieselmotor betrieben wird.

Aktuelle Schnellbereitschaftsanlagen in Form von Stromerzeugungsbeziehungsweise Notstromaggregaten haben ausschließlich die Aufgabe, einen Notbetrieb und somit eine temporäre Unabhängigkeit von Stromnetzen zu gewährleisten. Solche Aggregate werden auf Basis von Verbrennungskraftmaschinen (meist Otto- oder Dieselkraftstoff) betrieben. Die Stromversorgung wird über einen Kaltstart ermöglicht, wodurch sich längere Reaktionszeiten ergeben. Zudem sind herkömmliche Anlagen nicht für eine größere Laufzeit ausgelegt.

Eine Schnellbereitschaftsanlage zur Notstromversorgung von Signalanlagen wird in DE L0014435M AZ beschrieben. Die Schnellbereitschaftsanlage wird über eine Batterie versorgt, die als Energiequelle für einen Gleichstrommotor dient. Der Gleichstrommotor ist über eine Welle mit einem Drehstromgenerator verbunden. Auf der Welle zwischen Gleichstrommotor und Drehstromgenerator befindet sich eine Schwungmasse.

Zur Notstromversorgung einer Befeuerungsanlage von Flugplätzen wird in DE 197 70 75 U eine Schnellbereitschaftsanlage offenbart, welche über ein Dieselaggregat mit angeschlossenem Drehstromgenerator verfügt. Zwischen Dieselaggregat und Drehstromgenerator wird ein Schwungrad eingesetzt.

DE 14 65 803 A offenbart eine Schnellbereitschaftsanlage zur Notstromversorgung von Verbrauchern und besteht aus einem Drehstrommotor, einem Schwungrad und einem Drehstromgenerator, der die Versorgung der Verbraucher übernimmt. Im Falle eines Netzausfalls wird der Generator über das Schwungrad solange mit Energie versorgt, bis ein Dieselaggregat die Generatorwelle antreibt.

In der Druckschrift DE 20 2009 019 105 U1 wird eine Anlage zum Bereitstellen eines Energieträgers unter Einsatz von Kohlendioxid als Kohlenstofflieferant und von elektrischer Energie offenbart. Als Energieträger wird Methanol genannt. Eine Silicon-Fire CO₂-Abscheidung stellt CO₂ aus Rauchgas für eine Methanolsyntheseanlage bereit. Der Methanolsynthese wird vorzugsweise Wasserstoff aus einer Elektrolyseanlage zugeführt. Die Silicon-Fire Anlage wird auch zur Bereitstellung von Regelenergie verwendet. Hierzu wird die Anlage je nach Bedarf in ihrem Arbeitspunkt neu eingeregelt.

In DE 10 2005 046 746 A1 wird ein Verfahren zur Bereitstellung von Energie beschrieben, wobei eine Prozess-Speicherflüssigkeit (beispielsweise Methanol) als Energietransport- und -speichermedium genutzt wird. Das gewünschte Endprodukt in der Brennstoffzelle stellt schließlich die elektrische Energie dar. Der Fokus liegt hierbei auf der Energieerzeugung und -speicherung, welche nicht für den Einsatz in einer Schnellbereitschaftsanlage ausgelegt sind. Die Methanolsynthese wird zudem in weiteren Anmeldungen wie in der WO 1997/003 937 A1 oder in der DE 10 2009 007 576 A1 beschrieben und haben die Stromerzeugung als Gegenstand.

Schnellbereitschaftsanlagen nach dem oben genannten Stand der Technik sind dadurch gekennzeichnet, dass sie ausschließlich einen Notbetrieb absichern können, der eine Notbeleuchtung und/oder Notfahrweisen von technischen Anlagen, z.B. Pumpbetrieb, einer Pumpenanlage vorsieht. Schnellbereitschaftsanlagen nach dem Stand der Technik sind nicht in der Lage, Strom, Wärme und Treibstoff abzugeben sowie Wärme, Deionat und Kohlendioxid zurück zu gewinnen.

Die Veröffentlichung DE 101 18 353 A1 offenbart eine Vorrichtung zur unterbrechungsfreien Stromversorgung. Sie weist eine Brennstoffzelle zur Stromerzeugung durch kalte Oxidation von Wasserstoff zu Wasser bei Ausfall einer Hauptstromquelle, insbesondere bei Ausfall eines Stromversorgungsnetzes, und einen Speicher für den Wasserstoff auf. Für die Wasserstoffspeicherung in Methanol wird die Verwendung von CO2 aus der Luft, hier Außen- bzw. Umgebungsluft, genannt.

WO 2012/028 326 A1 beschreibt ein Verfahren zum Kohlendioxidneutralen Ausgleich von Strommengenschwankungen in einem Stromnetz, insbesondere mit regenerativen Energiequellen. Bei einer Erzeugungsspitze von elektrischer Energie aus einer vorzugsweise regenerativen Energiequelle wird in einer Elektrolyseeinheit zur Wasserstofferzeugung insbesondere von Wasser eingesetzt. Der Wasserstoff wird einer Reaktoreinheit zur katalytischen Erzeugung von Methanol oder Methan zugeführt. Der erzeugte kohlenwasserstoffhaltige Energieträger wird zumindest teilweise und bedarfsabhängig in einer Brennkammer verbrannt und die thermische Energie des bei der Verbrennung gebildeten Rauchgasstroms wird zur Erzeugung von elektrischer Energie in einem Gasturbinenprozess und/oder in einem Dampfturbinenprozess genutzt und die erzeugte elektrische Energie in das Stromnetz eingespeist. Das Rauchgas wird zumindest teilweise als Kohlenstoffquelle für die Erzeugung des kohlenwasserstoffhaltigen Energieträgers der Reaktoreinheit zugeführt.

In WO 2000 025 380 A2 wird ein Verfahren zum Speichern von elektrischer Energie oder von Wasserstoff offenbart. Das Verfahren umfasst die Schritte (a) Elektrolyse von Wasser, um Wasserstoff zu erhalten; (b) Reaktion des Wasserstoffs aus Schritt (a) mit Kohlendioxid, um mindestens eine Speichermedium, bevorzugt Methanol, zu bilden; (c) Speicherung der Speicherverbindung; und (d) anschließende Umwandlung der Speicherverbindung zurück in Wasserstoff oder Verwendung der Speicherverbindung, um einen Verbrennungsmotor zu betreiben oder Strom direkt oder indirekt zu erzeugen.

In US 2006/0 078 773 A1 wird ein System zum Bereitstellen von Notstrom für eine Last, die von einer primären Energiequelle gespeist wird, offenbart. Eine Reserveleistung soll durch einen Ultrakondensator und/oder eine Batterie und/oder eine Brennstoffzelle bereitgestellt werden. Eine Steuerung steuert das Anlegen der Reserveleistung an die Last, wenn eine Verschlechterung der Leistung der primären Energiequelle festgestellt wird.

DE 197 22 598 A1 beschreibt ein Brennstoffzellensystem. Im Betriebszustand des Brennstoffzellensystems ist dem Anodenraum ein Brennstoff, insbesondere ein Wasser/Methanol-Gemisch, und dem Kathodenraum ein Oxidator, insbesondere Sauerstoff, zuführbar. Das Brennstoffzellensystem kann als Kombination einer unterbrechungsfreien Stromversorgung und eines Notstromaggregats eingesetzt werden.

Aus US 6 555 989 B1 ist ein Energieerzeugungssystem, das eine Brennstoffzelle und eine wiederaufladbare Speicherbatterie umfasst, die über einen DC-DC-Wandler miteinander gekoppelt sind. Während die Batterieeinheit der Spannungshaltung dient und dazu beiträgt, den Brennstoffzellenprozess zu stabilisieren, nutzt die Brennstoffzelle Methan bzw. Methanol, die zum eigentlichen nutzbaren Energieträger, hier Wasserstoff, chemisch gewandelt werden.

US 2010/0 266 917 A1 verfolgt die Zielstellung, mittels einer künstlichen Last bzw. einer Spannungserhöhung am Einspeisepunkt eines Brennstoffzellensystems, hier als unterbrechungsfreie Stromversorgung eingesetzt, das Brennstoffzellensystem in Betrieb zu halten und die Membranen der Brennstoffzellen vor dem Austrocknen zu schützen. Nach einem Betrieb über einen Zeitraum, der ausreicht, um den Brennstoffzellenstapel zu rehydrieren, kann der Betrieb des Brennstoffzellensystems eingestellt werden. Als Einsatzprodukte des Brennstoffzellensystems werden Wasserstoff und Luftsauerstoff genannt. Die Einsatzprodukte werden aus einem Versorgungssystem bereitgestellt.

DE 103 07 112 A1 offenbart ein System zur Speicherung und Rückgewinnung von erneuerbarer Energie. Für die Wasserstoffherstellung wird eine Elektrolyse verwendet. Die Rückverstromung des Wasserstoffs erfolgt über eine Brennstoffzelle. Der Sauerstoff für die Brennstoffzellenreaktion wird aus der Atmosphäre bezogen. Der von der Elektrolyse produzierte Wasserstoff soll in einem Drucktank, welcher strömungstechnisch mit der Vorrichtung zur Erzeugung von Wasserstoff verbunden ist, gespeichert werden.

DE 10 2015 118 736 A1 betrifft ein Verfahren und eine Vorrichtung zur Energieversorgung und Luftkonditionierung für stationäre und mobile Anwendungen und eine stationäre oder mobile Anwendung hierzu. Regenerative Energie wird in Form von Methanol gespeichert und einem Notstromsystem zugeführt. Hierzu wird Raumluft entfeuchtet, das CO2 entfernt, Sauerstoff aus einer Elektrolyse der Luft zugesetzt, die Luft befeuchtet und auf Nenntemperatur erhitzt. Die dabei entstehende Prozesswärme wird für den Antrieb einer Absorptionswärmepumpe genutzt. Die By-Produkte CO2 und Wasserstoff werden katalytisch zu Methanol gebunden und in einem Tank gespeichert. Im Falle einer Netzunterbrechung oder einem Spannungsausfall wird das Methanol in einer Direktmethanolbrennstoffzelle in Strom und Wärme rückgewandelt.

Weitere Notstromanlagen sind beispielsweise aus US 2004/247961 A1, DE 20 2010 012734 U1 und US 2003/072977 A1 bekannt.

### Darstellung der Erfindung

Aufgabe der Erfindung ist es, eine Schnellbereitschaftsanlage zur Vermeidung von Stromausfällen (Blackout) zur Verfügung zu stellen, welche überschüssige elektrische Energie aus regenerativen Anlagen als chemisch gespeicherte Energie in einem Speichermedium, bevorzugt Methanol, für Notfälle zur Verfügung stellt. Es ist von besonderem Interesse, bei einem Netzausfall in möglichst kurzer Zeit eine alternative Versorgungsquelle in Betrieb nehmen zu können.

Die Aufgabe wird gelöst durch die in den Ansprüchen aufgeführten Merkmale.

Erfindungsgemäß wird diese Aufgabe mittels einer Schnellbereitschaftsanlage gelöst. Diese besteht aus einer Erzeugeranlage, einer Turbine-Generator-Anlage und/oder einer Direktmethanolbrennstoffzellenanlage, einer Verbraucheranlage, einer Methanolerzeugungsanlage, einer Rückgewinnungsanlage für Deionat und Kohlenstoffdioxid (CO₂), einem Tanksystem für Deionat, CO₂ (flüssig) und Methanol (MeOH) und einem Kürzestzeitspeicher. Die Funktion einer herkömmlichen Batterie, die die Stromspeicherung und Stromabgabe zum Inhalt hat, wird vollständig ersetzt und durch zusätzliche Funktionen erweitert. Die zusätzlichen Funktionen bestehen insbesondere darin, dass die hier beschriebene Schnellbereitschaftsanlage Wasserstoff, Sauerstoff, Methanol, Deionat, Kohlendioxid (flüssig) und Wärme zusätzlich zum Notstrom bereitstellen kann und dies sowohl im ungestörten Betrieb als auch bei einem Netzausfall (z. B. Blackout) realisiert. Weiterhin sind die spezifischen Kosten, die sich aus Investitions-, Wartungs- und Betriebskosten ergeben, bezogen auf eine konventionelle Batteriespeicheranlage, wesentlich geringer. Die Speicherkapazität der hier beschriebenen Schnellbereitschaftsanlage kann entsprechend der Verbraucheranforderungen flexibel angepasst werden.

Mittels eines Kürzestzeitspeichers, der extreme Gradienten in der Stromaufnahme und Stromabgabe realisieren kann, sind wechselnde Betriebsweisen, Übergang vom Hot-Standby-Betrieb zum Nennbetrieb und vom Nennbetrieb zum Hot-Standby-Betrieb problemlos realisierbar. Zur Unterstützung der angeforderten Fahrweise (situationsbezogener Wechsel der Betriebsart, hier Hot-Standby-Betrieb oder Nennbetrieb) kommen Kürzestzeitspeicher, hier Ultrakondensatoren, zum Einsatz. Bei einem Hot-Standby-Betrieb handelt es sich um einen vorübergehenden Betrieb einer Anlage oder mehrerer Anlagen bei minimaler Leistung, welche überwiegend für die Eigenversorgung zuständig sind. Bei Netztrennung schaltet die Methanolerzeugungsanlage der Schnellbereitschaftsanlage vom Nennbetrieb in den Hot-Standby-Betrieb um, wobei ein Methanolreformer der Methanolerzeugungsanlage zugeschaltet wird, und die Turbine-Generator-Anlage und/oder die Direktmethanolbrennstoffzellenanlage vom Hot-Standby-Betrieb in den Nennbetrieb um. Das von der Verbraucheranlage, der Methanolerzeugungsanlage der Schnellbereitschaftsanlage synthetisierte Methanol wird nun der Turbine-Generator-Anlage und/oder der Direktmethanolbrennstoffzellenanlage zugeführt und somit chemische in elektrische Energie zurückgewandelt. Da die Zeit für einen Lastwechsel oder das Hoch bzw. Herunterfahren einzelner Anlagenkomponenten sehr kurz sein kann, werden Kürzestzeitspeicher verwendet, die sowohl die Unterbrechungsfreiheit als auch die Einhaltung von geltenden Qualitätskriterien der Stromversorgung von Verbrauchern auf höchstem Niveau garantieren.

Die Schnellbereitschaftsanlage, welche eine Rückverstromungsanlage, eine Methanolerzeugungsanlage und eine Speicheranlage für Methanol, Deionat und verflüssigtem CO₂ enthält, wobei die Methanolerzeugungsanlage (MEA) und die Rückverstromungsanlage in verschiedenen Betriebsphasen abwechselnd im Nennbetrieb und im Hot-Standby-Betrieb arbeiten, wandelt und speichert elektrische Energie in Form von chemischer Energie mittels der Verbraucheranlage der Schnellbereitschaftsanlage, der Methanolerzeugungsanlage, hier Elektrolyse, Methanolsynthese, Methanolverteiler und Methanolreformer. Das erzeugte Methanol wird in einem Tanksystem, hier z.B. einem Doppelschichttank, gespeichert. Die chemisch gespeicherte Energie wird im Fall einer Netztrennung mittels einer Direktmethanolbrennstoffzellenanlage und/oder bei größeren Leistungen mittels einer Turbine-Generator-Anlage in elektrische Energie rückgewandelt. Die Schnellbereitschaftsanlage entspricht einer Inselanlage, die mittels Hot-Standby-Betrieb arbeitet, wodurch extreme Gradienten in der Energieaufnahme und Energieabgabe realisiert werden können. So arbeitet die Methanolerzeugungsanlage bei ungestörtem Netzbetrieb im Normalbetrieb mit Nennleistung und die Rückverstromungsanlage, Direktmethanolbrennstoffzellenanlage und/oder die Turbine-Generator-Anlage im Hot-Standby-Betrieb. Im Störungsfall, z. B. einer Netztrennung oder eines Blackout, arbeitet die Rückverstromungsanlage, Direktmethanolbrennstoffzellenanlage und oder die Turbine-Generator-Anlage im Nennbetrieb und die Methanolerzeugungsanlage im Hot-Standby-Betrieb.

Die notwendigen Einsatzmedien der Schnellbereitschaftsanlage, hier insbesondere Deionat für die Elektrolyse und Kohlendioxid für die Methanolsynthese müssen bei optimalem Wirkungsgrad der Gesamtanlage aus dem Abgas der Rückverstromungsanlage, zurück gewonnen werden. Die Rückgewinnung der Einsatzmedien erfolgt über eine CO₂-Wärmepumpenanlage. CO₂-Wärmepumpenanlage bedeutet hier, dass CO₂ als Kältemittel der Wärmepumpe zum Einsatz kommt. Die Wärme des Abgases der Rückverstromungsanlage wird mittels des Verdampfers der CO₂-Wärmepumpe zurück gewonnen und der verdichteten Frischluft mittels Wärmepumpenkondensator zugeführt. Hierdurch wird Treibstoff, hier Methanol, eingespart.

Die vom Verdampfer der CO₂-Wärmepumpe aufgenommene Energie wird dem Abgas entzogen, wodurch der Taupunkt im Abgas unterschritten wird und im Abgas enthaltenes Wasser kondensiert. Das aus dem Abgas gewonnene Wasser ist salzfrei und kann als Deionat für eine Elektrolyse verwendet werden. Die nicht unerhebliche Kondensationswärme wird durch den Verdampfer der CO₂-Wärmepumpe aufgenommen und an den Kondensator der CO₂-Wärmepumpe weitergeleitet. Das wasserfreie Abgas besteht nun zu einem großen Teil aus CO₂. Da CO₂ für die Durchführung der Methanolsynthese benötigt wird, wird das Abgas über einen CO₂-Abscheider mit einer CO₂₋durchlässigen Membran gefahren. Um die CO₂-Abscheidung so optimal wie möglich zu gestalten, werden Druckregler für das Abgas und das CO₂ am Ausgang des CO₂-Abscheiders vorgesehen. Mittels eines zusätzlichen CO₂-Verdichters wird die Zuführung des zurück gewonnenen CO₂ in den Kältekreislauf der CO₂-Wärmepumpe ermöglicht. Die hier angestrebte CO₂-Verflüssigung mittels einer CO₂-Wärmepumpe ist notwendig, da gasförmiges CO₂ nur sehr ungünstig und im begrenzten Umfang gespeichert werden kann.

Die CO₂-Wärmepumpe besteht aus einem Verdampfer, einem Verdichter, einem Kondensator, einem Expansionsventil und zwei Zusatzeinheiten, die für den hier beschriebenen Einsatz erforderlich sind. Die Zusatzeinheiten betreffen eine CO₂(gasförmig)-Zuführung zwischen Verdampfer und Verdichter der CO₂-Wärmepumpe sowie eine CO₂-(flüssig)-Abführung/Zuführung zwischen Kondensator und Expansionsventil der CO₂-Wärmepumpe. An die CO₂-(flüssig)-Abführung/Zuführung der CO₂-Wärmepumpe ist ein CO₂-(flüssig)-Tank angeschlossen. Der CO₂-(flüssig)-Tank ist mit der Methanolsynthese verbunden und versorgt diese mit CO₂.

Die erfindungsgemäße Schnellbereitschaftsanlage kann große Leistungen nahezu unbefristet bereitstellen. Die hierzu erforderlichen Speicher, hier Deionat-Tank, CO₂ (flüssig) Tank und Methanol-Tank sind sehr kostengünstig und aktuellen Batterielösungen in allen Belangen überlegen. Hinzu kommt, dass die Schnellbereitschaftsanlage über einen Methanolreformer (Methanol zu Wasserstoff und CO₂) verfügt, wodurch die Methanolerzeugungsanlage im Hot-Standby-Betrieb betrieben werden kann.

Da die Schnellbereitschaftsanlage bis zur Netzunterbrechung ununterbrochen elektrische Energie aus dem speisenden Netz (Erzeuger- oder Übertragungsnetz) bezieht, kann die Anlage auch Zusatzfunktionen übernehmen. Hierzu zählen beispielsweise die Anfahrhilfe für Windparks im Zusammenhang mit einem Netzwiederaufbau bei Inselfahrweise, die Kompensation von Spannungseinbrüchen infolge Wolkenzug innerhalb eines PV-Parks sowie eine Tankstellenfunktion mittels des selbst produzierten Methanols. Weiterhin kann die Anlage während des ungestörten Betriebs für die Spannungs- und Frequenzhaltung zum Einsatz kommen und somit zur Netzstabilisierung beitragen

Vorteile gegenüber dem Stand der Technik sind vor allem eine schnelle Reaktionszeit zur Stromversorgung, eine Strom-, Wärme- und Methanolproduktion sowie die Rückgewinnung und Speicherung von Einsatzmedien, hier Deionat und CO₂ (flüssig), um große Leistungen auch für längere Zeiträume anbieten zu können. Hierbei sind die einzelnen Komponenten im Stand der Technik bekannt, jedoch stellt deren Kombination und Ergänzung eine Neuheit dar.

Einen weiteren Vorteil der vorliegenden Erfindung stellt die hohe Effizienz der Gesamtanlage dar, die insbesondere durch den Einsatz einer CO₂-Wärmepumpe erreicht wird.

### Ausführung der Erfindung

Die Erfindung wird anhand von Zeichnungen näher erläutert. Hierzu zeigen
- Figur 1: Schnellbereitschaftsanlage nach Netztrennung. Leistungsschalter zwischen Netz I und Gleichrichter ausgeschaltet.
- Figur 2: CO₂ Verflüssigung mittels CO₂-Wärmepumpe und Wärmepumpen Druckhaltung
- Figur 3a: Doppelschichttank (H₂O-Tank MeOH-Tank) mit Brandschutzeinrichtung vor der Auslösung, und
- Figur 3b: Doppelschichttank (H₂O-Tank MeOH-Tank) mit Brandschutzeinrichtung nach der Auslösung.

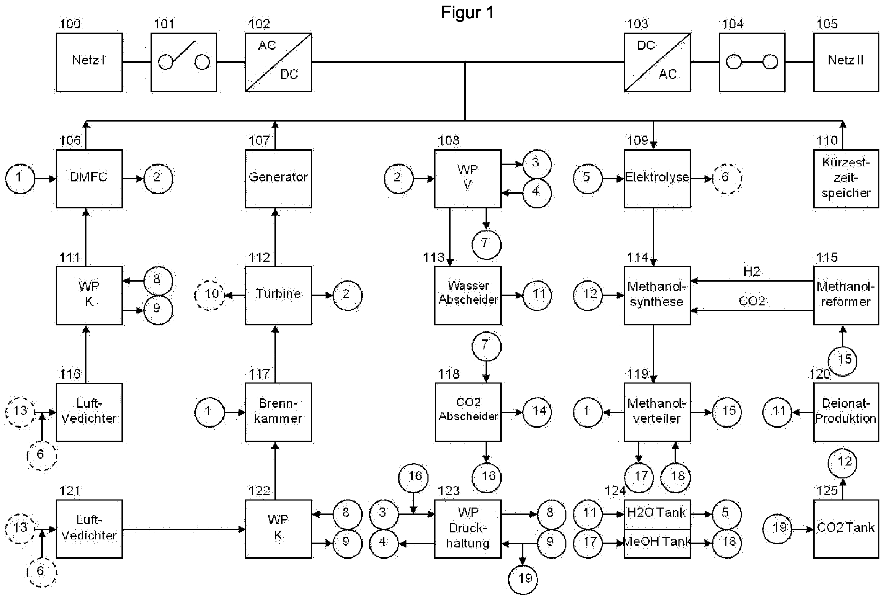

Die Figur 1 zeigt eine Schnellbereitschaftsanlage SBA zur Notversorgung von Verbrauchern nach einem Netzausfall von Netz I, Leistungsschalter zwischen Netz I und Wechselrichter der SBA ausgeschaltet. Der Betrieb der Schnellbereitschaftsanlage SBA unterteilt sich in zwei Betriebsphasen.

In einer ersten Betriebsphase befindet sich die Schnellbereitschaftsanlage Schnellbereitschaftsanlage SBA an einem ungestörten Erzeuger-, Übertragungs- oder Verteilungsnetz, Netz I 100, das über einen Leistungsschalter 101 zu- oder weggeschaltet werden kann. In dieser Betriebsphase kann die Schnellbereitschaftsanlage SBA Energie aus dem vorgelagerten Stromnetz, Netz I 100 beziehen. Der in einem Gleichrichter 102 gleichgerichtete Strom wird von einer Elektrolyseanlage 109 aufgenommen. Die Elektrolyseanlage 109 erzeugt aus Wasser (hier Deionat), das aus einer Wasseraufbereitung 120 (hier Deionat-Produktion) und/oder einem Wassertank 124, hier H₂O-Tank bereitgestellt wird, Wasserstoff und Sauerstoff. Der Wasserstoff wird gemeinsam mit CO₂, der über eine CO₂-Abscheidung 118 gewonnen wurde, in einer CO₂-Wärmepumpe 123 und123a-h (hier Wärmepumpen-Druckhaltung) verflüssigt wurde und in einem CO₂-(flüssig)-Tank 125 (hier CO₂-Tank) gespeichert wurde, der Methanolsynthese 114 zugeführt. In der Methanolsynthese 114 wird Methanol hergestellt und einem Methanolverteiler 119 zugeführt. Der Methanolverteiler 119 führt Methanol nach Bedarf an eine TGA-Brennkammer 117 einer Turbine-Generator-Anlage TGA (bestehend aus einem Generator 107, einer Turbine 112, der TGA-Brennkammer 117, einem TGA-Wärmepumpen-Kondensator 122, einem Luftverdichter 121), und/oder eine Direktmethanolbrennstoffzelle 106 einer Direktmethanolbrennstoffzellenanlage DMBA (bestehend aus der Direktmethanolbrennstoffzelle 106, mit einem DMBA-Wärmepumpen-Kondensator 111 und einem DMBA-Luftverdichter 116, einen Methanolspeicher 124b und einen Methanolreformer 115) ab. Der Methanolreformer 115 dient dazu, Methanol in CO₂ und Wasserstoff aufzubereiten, damit die Methanolsynthese 114 bei Teillastbetrieb (Hot-Standby-Betrieb) nicht abgefahren werden muss. Die Schnellbereitschaftsanlage SBA produziert in dieser ersten Betriebsphase geringe Mengen an elektrischer Energie, Wärme, Deionat und CO₂ (flüssig) über den Hot-Standby-Betrieb der Rückverstromungsanlage, welche aus der Direktmethanolbrennstoffzellenanlage DMBA und/oder der Turbine-Generator-Anlage TGA, die Wasser-, hier Deionat, und CO2-Abscheidung und die Deionat- und CO2-Speicherung in Tanksystemen besteht, jedoch auch große Mengen an Wasserstoff, Sauerstoff, Methanol und Wärme mittels der im Nennbetrieb betriebenen Methanolerzeugungsanlage MEA (mit einer Elektrolyse 109, einer Methanolsynthese 114, einem Methanolreformer 115 und einem Methanolverteiler 119). Die Prozesswärme der Methanolsynthese 114 und der Sauerstoff der Elektrolyse 109 können den Verbrauchern über eine Wärmeversorgung und/oder eine Klimaanlage mit Sauerstoffanreicherung zugeführt werden. Das in dieser Betriebsphase produzierte Methanol, Deionat und CO₂ (flüssig) werden gespeichert und dienen der Betriebsführung in einer zweiten Betriebsphase.

In einer zweiten Betriebsphase befindet sich die Schnellbereitschaftsanlage SBA an einem gestörten Erzeuger-, Übertragungs- oder Verteilungsnetz, dem Netz I 100, und wird mittels eines Leistungsschalters 101 vom Netz I 100, dem Erzeuger-, Übertragungs- oder Verteilungsnetz, getrennt. Im Moment der Netztrennung wird die Turbine-Generator-Anlage TGA und/oder die Direktmethanolbrennstoffzellenanlage DMBA aus dem Teillastbetrieb (Hot-Standby-Betrieb) in den Nennbetrieb überführt und versorgt nun über den Wechselrichter 103, über den eingeschalteten Leistungsschalter 104 des Verbrauchernetzes 105, das Verbrauchernetz 105, Netz II. Die Methanolerzeugungsanlage MEA wird aus dem Nennbetrieb in den Teillastbetrieb (Hot-Standby-Betrieb) überführt. Die Turbine-Generator-Anlage TGA und/oder die Direktmethanolbrennstoffzellenanlage DMBA werden mit Methanol aus einem Methanoltank 125 betrieben und liefern Gleichstrom, der in einem Wechselrichter 103 in Drehstrom umgewandelt wird. Der Drehstrom dient der Versorgung der Verbraucher im Verbrauchernetz, Netz II 105. Neben Gleichstrom liefern die Turbine-Generator-Anlage TGA bzw. die Direktmethanolbrennstoffzellenanlage DMBA auch Wärme. Während die Wärme der Direktmethanolbrennstoffzelle 106 der Direktmethanolbrennstoffzellenanlage DMBA auf einem geringen Temperaturniveau anfällt und vermutlich für die Versorgung von Verbrauchern nicht genutzt werden kann, kann die von der Gasturbine 112 abgegebene Wärme der Turbine-Generator-Anlage TGA, die auf einem sehr hohen Temperaturniveau anfällt, für die Wärmeversorgung der Verbraucher genutzt werden. Das Abgas der Direktmethanolbrennstoffzelle 106 und/oder der Gasturbine 112 wird einem Wärmepumpenverdampfer 108 zugeführt und abgekühlt. Das dabei anfallende Kondensat, hier Deionat, wird von einem Wasserabscheider 113 aufgenommen, gefiltert (beispielsweise mittels Aktivkohlefilter) und einem Doppelschichttank 124, hier dem H₂O-Tank 124a, zugeführt. Der CO₂-Abscheider 118 entzieht dem Abgas große Mengen an CO₂, die dem Kältemittelkreislauf einer CO₂-Wärmepumpe 123 (hier Wärmepumpen-Druckhaltung), die Bestandteil einer CO₂-Verflüssigung ist, zugeführt werden.

Im Folgenden werden die in Figur 1 eingekreisten Bezugszeichen, welche die Verbindungen der einzelnen Anlagenteile untereinander darstellen, näher erläutert. Bezugszeichen 1 beschreibt die Übergabe des Primärenergieträgers Methanol vom Methanolverteiler 119 zur Direktmethanolbrennstoffzelle 106 und/oder zur TGA-Brennkammer 117 der Gasturbine.

Bezugszeichen 2 beschreibt die Übergabe von Abgas der Direktmethanolbrennstoffzelle 106 und/oder der Gasturbine 112 an den Verdampfer der CO₂-Wärmepumpe 108.

Bezugszeichen 3 beschreibt die Abgabe von CO₂ gasförmig bei Niederdruck des Verdampfers der CO₂-Wärmepumpe 108 an die Wärmepumpen-Druckhaltung 123.

Bezugszeichen 4 beschreibt die Abgabe von CO₂ flüssig bei Niederdruck der Wärmepumpen-Druckhaltung 123 an den Verdampfer der CO₂-Wärmepumpe 108.

Bezugszeichen 5 beschreibt die Abgabe von Deionat aus dem H₂O-Tank 124a an die Elektrolyse 109.

Bezugszeichen 6 beschreibt die Abgabe von Sauerstoff der Elektrolyse 109 an den Luft-Verdichter 116 der Direktmethanolbrennstoffzellenanlage DMBA und/oder den Luft-Verdichter 121 der Turbine-Generator-Anlage TGA.

Bezugszeichen 7 beschreibt die Abgabe von wasserfreiem Abgas vom Verdampfer der CO₂-Wärmepumpe an den CO₂-Abscheider 118.

Bezugszeichen 8 beschreibt die Abgabe von CO₂ gasförmig bei Hochdruck der Wärmepumpen Druckhaltung 123 an den DMBA-Wärmepumpen-Kondensator 111 der Direktmethanolbrennstoffzellenanlage DMBA und/oder TGA-Wärmepumpen-Kondensator 122 der Turbine-Generator-Anlage TGA.

Bezugszeichen 9 beschreibt die Abgabe von CO₂ flüssig bei Hochdruck vom DMBA-Wärmepumpen-Kondensator 111 der Direktmethanolbrennstoffzellenanlage DMBA und/oder dem TGA-Wärmepumpen-Kondensator 122 der Turbine-Generator-Anlage TGA an die Druckhaltung der CO₂-Wärmepumpe.

Bezugszeichen 10 beschreibt die Wärmeauskopplung an der Gasturbine 112 der Turbine-Generator-Anlage TGA zum Zwecke der Wärmeversorgung von Verbrauchern.

Bezugszeichen 11 beschreibt die Übergabe von Deionat aus der Wasser Abscheidung 113 an den H₂O-Tank 124a.

Bezugszeichen 12 beschreibt die Übergabe von CO₂ gasförmig aus dem CO₂-Tank 125 an die Methanolsynthese 114.

Bezugszeichen 13 beschreibt die Zuführung von Frischluft an den Luft-Verdichter 116 der Direktmethanolbrennstoffzellenanlage DMBA und/oder den Luft-Verdichter 121 der Turbine-Generator-Anlage TGA.

Bezugszeichen 14 beschreibt die Abführung von wasser- und CO₂-freiem Abgas aus dem CO₂-Abscheider 118.

Bezugszeichen 15 beschreibt die Abführung von Methanol aus dem Methanolverteiler 119 zum Methanolreformer 115.

Bezugszeichen 16 beschreibt die Zuführung von CO₂ gasförmig zum Kältemittelkreislauf der CO₂-Wärmepumpe bei Niederdruck vor der Wärmepumpen Druckhaltung 123.

Bezugszeichen 17 beschreibt die Zuführung von Methanol vom Methanolverteiler 119 zum MeOH-Tank 124b.

Bezugszeichen 18 beschreibt die Abführung von Methanol vom MeOH-Tank 124b zum Methanolverteiler 119.

Bezugszeichen 19 beschreibt die Ab- und Zuführung von CO₂ flüssig bei Hochdruck zum und vom CO₂-Tank zum Kältemittelkreislauf der CO₂-Wärmepumpe vor der Wärmepumpen-Druckhaltung 123.

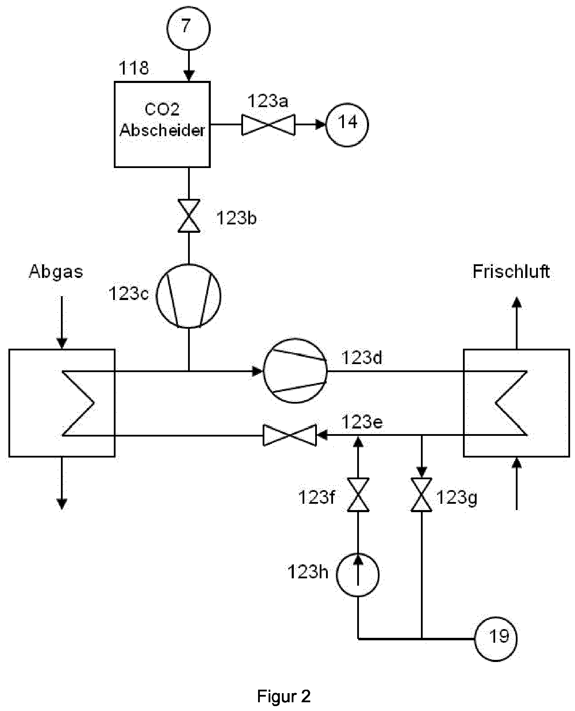

Figur 2 zeigt eine Detaildarstellung der Wärmepumpen-Druckhaltung 123, die für die CO₂-Verflüssigung verwendet wird. Mittels des Druckregelventils 123a wird der Abgasdruck geregelt. Gemeinsam mit dem Druckregelventil 123b, das der CO₂-Druckregelung dient, wird das erforderliche Druckgefälle über der CO₂-Abscheidemembran eingestellt. Für den Fall, dass der Druck für eine Einspeisung des zurück gewonnenen CO₂ in den Kältemittelkreislauf der Wärmepumpe nicht ausreicht, wurde ein zusätzlicher CO₂-Verdichter 123c berücksichtigt. Mittels eines geregelten Expansionsventils 123e werden die CO₂-(flüssig)-Abführung 123g vom und die CO₂-(flüssig)-Zuführung zum Kältemittelkreislauf der CO₂-Wärmepumpe geregelt. Sollte der Druck im Kältemittelkreislauf der CO₂-Wärmepumpe über dem des CO₂-Tanks 125 liegen, so kommt eine CO₂-flüssig-Pumpe 123h zum Einsatz. Die hier verwendete CO₂-Wärmepumpe übernimmt eine Doppelfunktion. Zum einen übernimmt sie die Kühlung des Abgases und die Erwärmung der Frischluft und zum anderen die CO₂-Verflüssigung

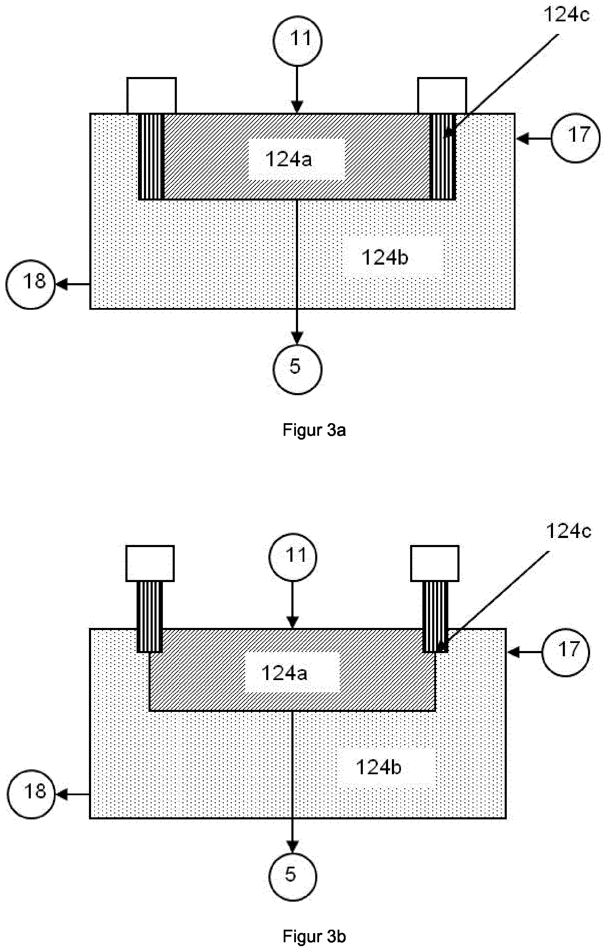

Die Figuren 3a und 3b zeigen einen Doppelschichttank mit einer Brandschutzeinrichtung. Figur 3a zeigt einen Doppelschichttank (H₂O-Tank - MeOH-Tank) mit der Brandschutzeinrichtung vor ihrer Auslösung, und Figur 3b zeigt einen Doppelschichttank (H₂O-Tank - MeOH-Tank) mit der Brandschutzeinrichtung nach ihrer Auslösung. Im Doppelschichttank befinden sich der H₂O-Tank 124a und der MeOH-Tank 124b. Der H₂O-Tank 124a befindet sich oberhalb des MeOH-Tanks 124b und wird durch Schotten gegenüber dem MeOH-Tank 124b abgedichtet. Bei einer Brandmeldung öffnen die Schotten, die mit einer Brandmelder-Auslöseeinheit 124c verbunden sind. Nach der Aktivierung der Brandmelder-Auslöseeinheit strömt Wasser aus dem H₂O-Tank 124a in den MeOH-Tank 124b. Durch die Vermischung von Wasser mit Methanol wird die Zündgrenze von Methanol so stark herabgesetzt, dass das entstandene Methanol-Wasser-Gemisch nicht mehr zünden und brennen kann.

Die Schnellbereitschaftsanlage in Figur 1 hat einen Doppelschichttank 124 in Betrieb. Die Befüllung des Tanksystems, bestehend aus dem H₂O-Tank 124a und dem MeOH-Tank 124b, erfolgt über eine Methanolsynthese 114 und einen Methanolverteiler 119. Zur Aufrechterhaltung einer kontinuierlichen Methanolproduktion dient ein Methanolreformer 115. Der Methanolreformer 115 und eine vorgeschaltete Elektrolyseeinheit 109 sind in der Lage, Wasserstoff zu produzieren, der in der Methanolsynthese 114 unter Zugabe von Kohlendioxid zu Methanol chemisch gebunden wird.

Neben der Methanolerzeugung und Speicherung verfügt die Schnellbereitschaftsanlage auch über eine Rückverstromungsanlage, die einen Methanolverbraucher darstellt. Ein Luftverdichter 116 und/oder 121, verdichten Frischluft, der auch Elektrolysesauerstoff aus der Elektrolyse 109 zugemischt werden kann. In dem DMBA-Wärmepumpen-Kondensator 111 und der TGA-Brennkammer 117 der CO₂-Wärmepumpe wird der Frischluft Wärme aus dem Abgas der Direktmethanolbrennstoffzelle 106 und/oder der Gasturbine 112 zugeführt. Die Wärme des Abgases wird mittels des Verdampfers der CO₂-Wärmepumpe 108 aufgenommen und mittels des Kältemittelkreislaufs der CO₂-Wärmepumpe 108 dem DMBA-Wärmepumpen-Kondensator 111 zugeführt. Hier wird das Kältemittel, z.B. CO₂, nach der Wärmeabgabe im DMBA-Wärmepumpen-Kondensator 111 und/oder im TGA-Wärmepumpen-Kondensator 122 über ein Expansionsventil 123e entspannt und an den Verdampfer der CO₂-Wärmepumpe 108 weitergeleitet. Die erhitzte Frischluft wird einer TGA-Brennkammer 117 der Gasturbine 112 und/oder der Direktmethanolbrennstoffzelle 106 zugeführt und hier mit Methanol gemischt, gezündet und chemisch umgesetzt. Das heiße Abgas treibt im Falle der Gasturbine 112 ein oder mehrere Turbinenräder der Gasturbine 112 an. Die Gasturbine 112 ist mit dem Generator 107 gekoppelt. Hier wird das von der Gasturbine 112 erzeugte Drehmoment in elektrische Energie umgewandelt. Die elektrische Energie liegt als Gleichstrom vor und kann nun direkt dem Verbraucher über den Wechselrichter 103, den Leistungsschalter 104 und das Verbrauchernetz 105, Netz II, zugeführt werden. Sollte beim Verbraucher im Verbrauchernetz 105, Netz II, kein Bedarf bestehen, so könnte die erzeugte Energie auch über den Gleichrichter 102, der nun im Wechselrichtermodus betrieben wird, den Leistungsschalter 101 in das Versorgungsnetz 100, Netz I, zurückgespeist werden.

Die Schnellbereitschaftsanlage verfügt über zahlreiche Zusatzanlagen, die der Speicherung von Zwischenprodukten wie beispielsweise Wasser (Deionat), CO₂ (flüssig) und Methanol in einem Tanksystem dienen. Wasser bester Qualität, auch als Deionat bezeichnet, wird über den Wasserabscheider 113, der auch einen Aktivkohlefilter enthält, aus dem Abgas der Gasturbine 112 und/oder der Direktmethanolbrennstoffzelle 106 gewonnen und dem Wassertank 124a (hier H₂O-Tank) zugeführt.

Das für die Methanolsynthese erforderlich CO₂ wird vorrangig aus dem Abgas der Gasturbine 112 und/oder der Direktmethanolbrennstoffzelle 106 gewonnen. Hierbei wird CO₂ über eine Membran extrahiert. Das gasförmige CO₂ wird mittels mehrerer Druckregler und einem zusätzlichen CO₂-Verdichter so aus dem Abgas extrahiert und konditioniert, dass es dem Kältemittelkreislauf der CO₂-Wärmepumpe vor dem Kältemittelverdichter der CO₂-Wärmepumpe zugeführt werden kann. Die Regler der CO₂-Druckhaltung 123, Abgasdruckregler mit Abgas Druckregelventil 123a und CO₂-Druckregler mit CO₂-Druckregelventil 123b regeln gemeinsam das notwendige Druckgefälle für die CO₂-Abscheidung 118 aus dem Abgas. Der CO₂-Verdichter 123c nach der CO₂-Abscheidung 118 dient der CO₂-Druckerhöhung vor der CO₂-Zuführung zum aus dem Kältemittelkreislauf der CO₂ Wärmepumpe. Die CO₂-Zuführung erfolgt vor dem CO₂-Verdichter der CO₂-Wärmepumpe. Beide CO₂-Verdichter 123c und 123d sind Drehzahl-geregelt. Das verflüssigte CO₂ kann vor dem CO₂-Expansionsventil über eine CO₂ flüssig Abführung 123g entnommen werden. Sollte CO₂-Kältemittel im Kältemittelkreislauf der CO₂-Wärmepumpe benötigt werden, kann flüssiges CO₂ aus einem CO₂-Tank 125 über eine CO₂ flüssig Zuführung 123f und eine CO₂ flüssig Pumpe 123h dem Kältemittelkreislauf der CO₂-Wärmepumpe zugeführt werden. Der CO₂-Tank kann auch von Extern gefüllt werden.

Für den Fall, dass die von der Elektrolyse 109 im Hot-Standby-Betrieb bereitgestellte Wasserstoffmenge nicht ausreicht, um die Methanolsynthese 114 stabil zu betreiben, wird Wasserstoff und Kohlendioxid durch einen zur Methanolsynthese 114 parallel geschalteten Methanolreformer 115 erzeugt und an die Methanolsynthese 114 übergeben.

Das in der Schnellbereitschaftsanlagen zum Einsatz kommende Tanksystem für Methanol stellt eine Kombination aus einem Wassertank 124a und einem Methanol-Tank 124b dar. Beide Medien können entweder in einem Doppelschichttank 124, Glockentank oder Balgtank gespeichert werden.

Die Schnellbereitschaftsanlage zur Umwandlung und Speicherung von elektrischer Energie in chemische Energie mittels einer Methanolerzeugungsanlage MEA ist mit einem Tanksystem verbunden, welches mindestens einen Doppelschichttank und/oder mindestens einen Glockentank und/oder mindestens einen Balgtank enthält. Das aus dem Abgas einer Direktmethanolbrennstoffzelle 106 und/oder einer Gasturbine 112 gewonnene Wasser wird über einen Wasserabscheider 113 der Schnellbereitschaftsanlage dem Wassertank 124a (H2O Tank) des Tanksystems zugeführt. Im Störungsfall (Brandfall), werden Schutzsysteme aktiviert, die zur Herabsetzung der Zündfähigkeit des Methanols führen.

### Bezugszeichen

- MEA: Methanolerzeugungsanlage
- TGA: Turbine-Generator-Anlage
- DMBA: Direktmethanolbrennstoffzellenanlage
- RGA: Rückgewinnungsanlage
- TS: Tanksystem
- KS: Kürzestzeitspeicher

- 1: Methanolzuführung zur Direktmethanolbrennstoffzelle/Gasturbine über Methanolverteiler
- 2: Abführung/Zuführung von Abgas
- 3: Abführung/Zuführung von Wärmepumpen Kältemittel (CO2) in der Gasphase
- 4: Abführung/Zuführung von Wärmepumpen Kältemittel (CO2) in der Flüssigphase
- 5: Abführung/Zuführung von Deionat
- 6: Abführung von Sauerstoff z.B. an eine Klimaanlage (nicht in der Zeichnung enthalten)
- 7: Abführung/Zuführung von wasserfreiem Abgas
- 8: Abführung/Zuführung von CO2 Kältemittel der Wärmepumpe in der Gasphase
- 9: Abführung/Zuführung von CO2 Kältemittel der Wärmepumpe in der Flüssigphase
- 10: Wärmeabführung zu einem Fernwärmenetz (nicht in der Zeichnung enthalten)
- 11: Abführung/Zuführung von Kondensat (Deionat)
- 12: Abführung/Zuführung von CO2
- 13: Frischluftzuführung
- 14: Abführung von wasser- und CO2-freiem Abgas
- 15: Abführung/Zuführung von Methanol zum Methanolreformer
- 16: Abführung/Zuführung von CO2 gasförmig zum Kältekreislauf der CO2 Wärmepumpe
- 17: Abführung/Zuführung von Methanol vom Methanolverteiler zum Methanoltank
- 18: Abführung/Zuführung von Methanol vom Methanoltank zum Methanolverteiler
- 19: Abführung/Zuführung von Methanol vom Kältekreislauf der CO2 Wärmepumpe zum CO2 Tank
- 100: Netz I (Versorgungsnetz)
- 101: Leistungsschalter (Versorgungsnetz)
- 102: Stromrichter (Gleichrichter)
- 103: Stromrichter (Wechselrichter)
- 104: Leistungsschalter (Verbrauchernetz)
- 105: Netz II (Verbrauchernetz)
- 106: Direktmethanolbrennstoffzelle
- 107: Generator (Gleichstromgenerator oder Drehstromgenerator mit Gleichrichter)
- 108: Wärmepumpenverdampfer
- 109: Elektrolyse
- 110: Kürzestzeitspeicher
- 111: Wärmepumpenkondensator für Direktmethanolbrennstoffzelle
- 112: Gasturbine
- 113: Wasserabscheider
- 114: Methanolsynthese
- 115: Methanolreformer
- 116: Luftverdichter für Luft zur Direktmethanolbrennstoffzelle
- 117: Brennkammer der Gasturbine
- 118: CO2 Abscheider
- 119: Methanolverteiler
- 120: Deionat-Produktion
- 121: Luftverdichter für Luft zur Brennkammer der Gasturbine
- 122: Wärmepumpenkondensator für Gasturbine
- 123: Wärmepumpen-Druckhaltung
- 124: H₂O-Tank - MeOH-Tank (Doppelschichttank)
- 125: CO₂-Tank (CO₂ (flüssig) Tank)

## Patentansprüche

1. Verfahren zur unterbrechungsfreien Stromversorgung mittels einer Schnellbereitschaftsanlage, welche eine Rückverstromungsanlage, eine Methanolerzeugungsanlage (MEA) und eine Speicheranlage für Methanol, Deionat und verflüssigtem CO₂, sowie einen Kürzestzeitspeicher (KS; 110) enthält,
wobei die Schnellbereitschaftsanlage in zwei Betriebsphasen arbeitet,
wobei in einer ersten, störungsfreien Betriebsphase, einer Speicherphase, die Schnellbereitschaftsanlage Energie aus einem Versorgungsnetz (Netz I) über einen Gleichrichter bezieht, wobei die Methanolerzeugungsanlage (MEA) im Nennbetrieb und die Rückverstromungsanlage im Hot-Standby-Betrieb arbeiten und in einer zweiten Betriebsphase, einem Netzausfall eines Versorgungsnetzes (100) (Netz I), die Rückverstromungsanlage im Nennbetrieb und die Methanolerzeugungsanlage (MEA) im Hot-Standby-Betrieb arbeiten, wobei ein Methanolreformer (115) der Methanolerzeugungsanlage (MEA) zugeschaltet wird, so dass ein Verbrauchernetz (105) (Netz II) ohne Unterbrechung von der Schnellbereitschaftsanlage über einen Wechselrichter 103 versorgt wird,
**gekennzeichnet dadurch,**
**dass** die Schnellbereitschaftsanlage und der Kürzestzeitspeicher (KS; 110) an einen Zwischenkreis eines AC/AC-Wandlers angebunden sind.

2. Verfahren nach Anspruch 1 **dadurch gekennzeichnet, dass** in der ersten, störungsfreien Betriebsphase die Schnellbereitschaftsanlage Energie aus einem vorgelagerten Stromnetz (100) bezieht und den Strom gleichrichtet und einer Elektrolyseanlage (109) zuführt, danach in der, im Nennbetrieb arbeitenden Methanolerzeugungsanlage (MEA) Methanol erzeugt und einem Methanolverteiler (119) zuführt, wobei der Methanolverteiler (119) Methanol an eine TGA-Brennkammer (117) einer Turbine-Generator-Anlage (TGA) oder eine Direktmethanolbrennstoffzelle (106), einen Methanol-Tank (124b) und/oder den Methanolreformer (115) zuführt, und
die Rückverstromungsanlage im Hot-Standby-Betrieb arbeitet,
wobei elektrische Energie, Wärme, Deionat und verflüssigtem CO₂ anfallen, welche der Methanolerzeugungsanlage (MEA) wieder zur Verfügung gestellt wird.

3. Verfahren nach Anspruch 1 oder 2 **dadurch gekennzeichnet, dass** in der ersten, störungsfreien Betriebsphase eine Spannungs- und Frequenzhaltung durch eine Erhöhung oder Verringerung der Rückverstromung realisiert wird, die einem Netzausfall entgegen wirkt.

4. Verfahren nach einem der vorhergehenden Ansprüche 1 bis 3 **dadurch gekennzeichnet, dass**
Verflüssigung und Speicherung von CO₂ in einer CO₂-Wärmepumpe, umfassend einen Direktmethanolbrennstoffzellenanlage (DMBA)-Wärmepumpen-Kondensator (111) und/oder einen Turbine-Generator-Anlage (TGA)-Wärmepumpen-Kondensator (122), einen Wärmepumpenverdampfer (108), einen CO₂-Abscheider (118), einen Abgas Druckregler mit Druckregelventil (123a), einen CO₂-Druckregler mit Druckregelventil (123b), einen zusätzlichen CO₂-Verdichter (123c), einen CO₂-Expansionsventil (123e), eine CO₂ flüssig Abführung aus dem Kältemittelkreislauf (123g), eine CO₂ flüssig Zuführung zum Kältemittelkreislauf (123f) und eine CO₂ flüssig Pumpe (123h), erfolgt und gleichzeitig zurück gewonnene Wärme der Rückverstromungsanlage zugeführt wird.

5. Schnellbereitschaftsanlage (SBA), welche eine Rückverstromungsanlage, eine Methanolerzeugungsanlage (MEA) und eine Speicheranlage für Methanol, Deionat und verflüssigtem CO₂, sowie einen Kürzestzeitspeicher (KS; 110) enthält,
wobei die Methanolerzeugungsanlage (MEA) und die Rückverstromungsanlage ausgebildet sind in verschiedenen Betriebsphasen abwechselnd im Nennbetrieb und im Hot-Standby-Betrieb zu arbeiten,
wobei die Schnellbereitschaftsanlage (SBA) mit einem Versorgungsnetz, einem Erzeuger-, Übertragungs- oder Verteilungsnetz (100), Netz I, über einen Leistungsschalter (104) und ein Verbrauchernetz (105), Netz II, über einen Gleichstromzwischenkreis verbunden ist,
wobei der Gleichstromzwischenkreis mit Energiespeichern, der Methanolerzeugungsanlage (MEA) und einem Kürzestzeitspeicher (110) in Wirkverbindung steht,
wobei die Schnellbereitschaftsanlage (SBA) eine Rückverstromungsanlage in Form einer Direktmethanolbrennstoffzellenanlage (DMBA) und/oder einer Turbine-Generator-Anlage (TGA) und einen Methanolspeicher, Methanol-Tank (124b) (MeOH Tank) umfasst,
wobei die Methanolspeicher (124b) seinerseits mit der Turbine-Generator-Anlage (TGA) oder der Direktmethanolbrennstoffzellenanlage (DMBA) verbunden ist,
wobei Überschussstrom aus dem Versorgungsnetz Netz I (100) und/ oder der Direktmethanolbrennstoffzellenanlage (DMBA) und/oder der Turbine-Generator-Anlage (TGA) im Methanolspeicher in Form von Methanol in dem Methanol-Tank (124b) (MeOH-Tank) gespeichert wird und im Notfall für eine Rückverstromung zur Verfügung steht, und **dadurch gekennzeichnet, dass** die Schnellbereitschaftsanlage und der Kürzestzeitspeicher (KS; 110) an einen Zwischenkreis eines AC/AC-Wandlers angebunden sind.

6. Schnellbereitschaftsanlage nach Anspruch 5, **dadurch gekennzeichnet, dass** die Direktmethanolbrennstoffzellenanlage (DMBA) und/oder die Turbine-Generator-Anlage (TGA) über eine Wärmepumpe und einen Wasser-Tank (124a) sowie einen CO₂-Tank (125) mit dem Methanolspeicher verbunden ist, wobei Abgas aus der Direktmethanolbrennstoffzelle (106) und/oder der Turbine-Generator-Anlage (TGA) zur Gewinnung von Wasser (Deionat) und CO₂ dient.

7. Schnellbereitschaftsanlage nach Anspruch 6, **dadurch gekennzeichnet, dass** der Wasser-Tank (124a) mit dem Methanol-Tank (124b) eine Einheit bildet.

8. Schnellbereitschaftsanlage nach Anspruch 6, **dadurch gekennzeichnet, dass** die CO₂-Verflüssigung einen CO₂-Abscheider (118), einen Abgas-Druckregler mit Druckregelventil (123a), einen CO₂-Verdichter (411c) nach CO₂-Abscheider (123c), einen CO₂-Verdichter der CO₂-Wärmepumpe (123d), ein CO₂-Expansionsventil (123e) der Wärmepumpe, eine CO₂-flüssig-Zuführung (123f) in den Kältemittelkreislauf, eine CO₂-flüssig-Abführung (123g) aus dem Kältemittelkreislauf, eine CO₂-flüssig-Pumpe (123h), einen CO₂-Tank (125), einen Wärmepumpenverdampfer (108) und einen Direktmethanolbrennstoffzellenanlage (DMBA)-Wärmepumpen-Kondensator (111) und/oder einem Turbine-Generator-Anlage (TGA)-Wärmepumpen-Kondensator (122) umfasst,
wobei der CO₂-Verdichter (123d) der Wärmepumpe und das CO₂-Expansionsventil (123e) der Wärmepumpe zwischen dem Verdampfer (108) und dem Direktmethanolbrennstoffzellenanlage (DMBA)-Wärmepumpen-Kondensator (111) und/oder dem Turbine-Generator-Anlage (TGA)-Wärmepumpen-Kondensator (122) über einen CO₂-Kältemittelkreislauf angeordnet ist, wobei der CO₂-Abscheider (118) ausgebildet ist vor dem CO₂-Verdichter (123d) gasförmiges CO₂ in den Kältemittelkreislauf einzuspeisen und flüssiges CO₂ nach dem Direktmethanolbrennstoffzellenanlage (DMBA)-Wärmepumpen-Kondensator (111) und/oder dem Turbine-Generator-Anlage (TGA)-Wärmepumpen-Kondensator (122) aus dem Kältemittelkreislauf in den CO₂-Tank (125) abzuführen.

## Claims

1. Method for an uninterruptible power supply by means of a rapid standby plant, which contains a reconversion plant, a methanol generation plant (MGP) and a storage system for methanol, deionised water and liquefied CO₂, as well as a very short term storage (VSTS; 110), whereby the rapid standby plant runs in two operating phases: in a first, fault-free operating phase, a storage phase, the rapid standby plant draws energy from a supply network (Network I) via a rectifier, during which the methanol generation plant (MGP) runs in nominal operation and the reconversion plant runs in hot standby operation; and in a second operating phase, a network failure of a supply network (100) (Network I), the reconversion plant runs in nominal operation and the methanol generation plant (MGP) runs in hot standby operation, with a methanol reformer (115) being connected to the methanol generation plant (MGP) so that a consumer network (105) (Network II) is supplied without interruption by the rapid standby plant via an inverter (103), **characterised in that** the rapid standby plant and the very short term storage (VSTS; 110) are connected to an intermediate circuit of an AC/AC converter.

2. Method according to claim 1, **characterised in that**, in the first, fault-free operating phase, the rapid standby plant draws energy from an upstream power grid (100), rectifies the current and supplies it to an electrolysis system (109), then produces methanol in the methanol generation plant (MGP), which runs in nominal operation, and supplies it to a methanol distributor (119), whereby the methanol distributor (119) supplies methanol to a TGP combustion chamber (117) of a turbine generator plant (TGP) or a direct methanol fuel cell (106), a methanol tank (124b) and/or the methanol reformer (115), and the reconversion plant runs in hot standby mode, producing electrical energy, heat, deionised water and liquefied CO₂, which is once again made available to the methanol generation plant (MGP).

3. Method according to claim 1 or 2, **characterised in that**, in the first, fault-free operating phase, voltage and frequency are maintained by increasing or decreasing the reverse power supply (from reconversion), thereby counteracting a grid failure.

4. Method according to any one of the preceding claims 1 to 3, **characterised in that** liquefaction and storage of CO₂ takes place in a CO₂ heat pump comprising a direct methanol fuel cell plant (DMFCP) heat pump condenser (111) and/or a turbine generator plant (TGP) heat pump condenser (122), a heat pump evaporator (108), a CO₂ separator (118), an exhaust gas pressure regulator with pressure regulating valve (123a), a CO₂ pressure regulator with pressure control valve (123b), an additional CO₂ compressor (123c), a CO₂ expansion valve (123e), a CO₂ liquid discharge from the refrigerant circuit (123g), a CO₂ liquid feed to the refrigerant circuit (123f) and a CO₂ liquid pump (123h); simultaneously, recovered heat also is fed to the reconversion plant.

5. Rapid standby plant (RSP) comprising a reconversion plant, a methanol generation plant (MGP) and a storage system for methanol, deionised water and liquefied CO₂, and a very short term storage (VSTS; 110), whereby the methanol generation plant (MGP) and the reconversion plant are designed to operate in different operating phases alternately in nominal operation and in hot standby operation, and the rapid standby plant (RSP) is connected to a supply network, a producer network, a transmission network or a distribution network (100), Network I, via a circuit breaker (104) and a consumer network (105), Network II, via a DC link; the DC link is operatively connected to energy storage devices, the methanol generation plant (MGP) and a very short term storage device (110). The rapid standby plant (RSP) comprises a reconversion plant in the form of a direct methanol fuel cell plant (DMFCP) and/or a turbine generator plant (TGP) and a methanol storage unit, methanol tank (124b) (MeOH tank). The methanol storage unit (124b) is in turn connected to the turbine generator plant (TGP) or the direct methanol fuel cell plant (DMFCP), with excess electricity from the supply network Network I (100) and/or the direct methanol fuel cell plant (DMFCP) and/or the turbine generator plant (TGP) being stored in the methanol storage unit in the form of methanol in the methanol tank (124b) (MeOH tank) and being available for reconversion to electricity in an emergency, and **characterised in that** the rapid standby plant and the very short term storage device (VSTS; 110) are connected to an intermediate circuit of an AC/AC converter.

6. Rapid standby plant according to claim 5, **characterised in that** the direct methanol fuel cell plant (DMFCP) and/or the turbine generator plant (TGP) is connected to the methanol storage unit via a heat pump and a water tank (124a) and a CO₂ tank (125), whereby exhaust gas from the direct methanol fuel cell (106) and/or the turbine generator plant (TGP) is used to recover water (deionised water) and CO₂.

7. Rapid standby plant according to claim 6, **characterised in that** the water tank (124a) forms a unit with the methanol tank (124b).

8. Rapid standby plant according to claim 6, **characterised in that** the CO₂ liquefaction comprises a CO₂ separator (118), an exhaust gas pressure regulator with pressure control valve (123a), a CO₂ compressor (411c) after the CO₂ separator (123c), a CO₂ heat pump CO₂ compressor (123d), a CO₂ expansion valve (123e) of the heat pump, a CO₂ liquid supply (123f) to the refrigerant circuit, a CO₂ liquid discharge (123g) from the refrigerant circuit, a CO₂ liquid pump (123h), a CO₂ tank (125), a heat pump evaporator (108) and a direct methanol fuel cell plant (DMFCP) heat pump condenser (111) and/or a turbine generator plant (TGP) heat pump condenser (122), whereby the CO₂ compressor (123d) of the heat pump and the CO₂ expansion valve (123e) of the heat pump are located between the evaporator (108) and the direct methanol fuel cell plant (DMFCP) heat pump condenser (111) and/or the turbine generator plant (TGP) heat pump condenser (122) via a CO₂ refrigerant circuit, and the CO₂ separator (118) is adapted to feed gaseous CO₂ into the refrigerant circuit upstream of the CO₂ compressor (123d) and to discharge liquid CO₂ downstream of the direct methanol fuel cell plant (DMFCP) heat pump condenser (111) and/or the turbine generator plant (TGP) heat pump condenser (122) from the refrigerant circuit into the CO₂ tank (125).

## Revendications

1. Procédé d'alimentation sans coupure au moyen d'une installation à opérationnalité rapide équipée d'un dispositif de récupération d'énergie, d'une installation de production de méthanol, d'une installation de stockage pour méthanol, eau minéralisée et CO₂ liquéfié, ainsi que d'un accumulateur de très courte durée (110) ; l'installation à opérationnalité rapide fonctionne en deux phases, une première phase de fonctionnement sans perturbation, une phase de stockage, dans laquelle l'installation à opérationnalité rapide reçoit l'énergie d'un réseau d'alimentation (réseau I) via un redresseur; l'installation de production de méthanol fonctionne en mode nominal et l'installation de récupération d'énergie fonctionne en mode de veille à chaud, puis une deuxième phase de fonctionnement, avec une panne de réseau d'un réseau d'alimentation (100) (réseau I), dans laquelle l'installation de récupération d'énergie fonctionne en mode nominal et l'installation de production de méthanol fonctionne en mode veille à chaud, avec un reformeur de méthanol (115) connecté à l'installation de production de méthanol, pour que tout réseau de consommateurs (105) (réseau II) demeure alimenté sans interruption par l'installation à opérationnalité rapide via un onduleur 103, **caractérisé par le fait que** l'installation à opérationnalité rapide et l'accumulateur de très courte durée (110) sont connectés à un circuit intermédiaire d'un convertisseur CA/CA.

2. Procédé selon la revendication 1, **caractérisé par le fait que**, dans la première phase de fonctionnement sans perturbation, l'installation à opérationnalité rapide prélève de l'énergie d'un réseau électrique (100) situé en amont, redresse le courant et alimente une installation d'électrolyse (109), puis produit du méthanol via l'installation de production de méthanol fonctionnant en mode nominal et alimente un distributeur de méthanol (119), le distributeur de méthanol (119) fournit du méthanol à une chambre de combustion (117) d'un ensemble turbogénérateur ou à une pile à combustible à méthanol direct (106), à un réservoir de méthanol (124b) et/ou au reformeur de méthanol (115), et l'installation de récupération d'énergie fonctionne en mode veille à chaud ; tout cela produit de l'énergie électrique, de la chaleur, de l'eau déminéralisée et du CO₂ liquéfié, cette énergie étant fournie de nouveau à l'installation de production de méthanol.

3. Procédé selon la revendication 1 ou 2, **caractérisé par le fait que**, dans la première phase de fonctionnement sans perturbation, la tension et la fréquence sont maintenues par une augmentation ou une diminution de la récupération d'énergie visant à contrecarrer une panne de réseau.

4. Procédé selon l'une des trois revendications précédentes 1 à 3, **caractérisé par le fait que** la liquéfaction et le stockage du CO₂ sont réalisés dans une pompe à chaleur au CO₂, comprenant un condenseur de pompe à chaleur d'installation à pile à combustible à méthanol direct (111) et/ou un condenseur de pompe à chaleur d'ensemble turbogénérateur (122), un évaporateur de pompe à chaleur (108), un séparateur de CO₂ (118), un régulateur de pression de gaz d'échappement avec vanne de régulation de la pression (123a), un régulateur de pression de CO₂ avec une vanne de régulation de la pression (123b), un compresseur de CO₂ supplémentaire (123c), une vanne de détente de CO₂ (123e), un système d'évacuation du CO₂ liquide du circuit de refroidissement (123g), une alimentation en CO₂ liquide du circuit de refroidissement (123f) et une pompe à CO₂ liquide (123h) et **par le fait que** la chaleur récupérée est simultanément acheminée vers l'installation de récupération d'énergie.

5. Installation à opérationnalité rapide comprenant une installation de récupération d'énergie, une installation de production de méthanol et une installation de stockage de méthanol, d'eau déminéralisée et de CO₂ liquéfié, ainsi qu'un accumulateur de très courte durée (110) ; l'installation de production de méthanol et l'installation de récupération d'énergie sont conçues pour fonctionner dans différentes phases de fonctionnement, alternativement en mode nominal et en mode veille à chaud ; l'installation à opérationnalité rapide est connectée à un réseau d'alimentation, un réseau de production, de transmission ou de distribution (100), réseau I, via un disjoncteur (104) et à un réseau de consommateurs (105), réseau II, via un circuit intermédiaire à courant continu ; le circuit intermédiaire à courant continu est en liaison active avec des accumulateurs d'énergie, l'installation de production de méthanol et un accumulateur de très courte durée (110) ; l'installation à opérationnalité rapide comprend une installation de récupération d'énergie sous forme d'installation à pile à combustible à méthanol direct et/ou d'ensemble turbogénérateur et un système de stockage de méthanol, un réservoir de méthanol (124b) (réservoir de MeOH) ; le réservoir de méthanol (124b) est lui aussi connecté à l'ensemble turbogénérateur ou à l'installation à pile à combustible à méthanol direct ; le courant excédentaire du réseau d'alimentation, réseau I (100), et/ou de l'installation à pile à combustible à méthanol direct et/ou de l'ensemble turbogénérateur est stocké dans le réservoir de méthanol sous forme de méthanol dans le réservoir de méthanol (124b) (réservoir de MeOH) et est disponible en cas d'urgence pour récupérer l'énergie, et **caractérisée par le fait que** l'installation à opérationnalité rapide et l'accumulateur de courte durée (110) sont connectés à un circuit intermédiaire d'un convertisseur CA/CA.

6. Installation à opérationnalité rapide selon la revendication 5, **caractérisée par le fait que** l'installation à pile à combustible à méthanol direct (DMBA) et/ou l'ensemble turbogénérateur (TGA) sont connectés au système de stockage de méthanol via une pompe à chaleur, un réservoir d'eau (124a) et un réservoir de CO₂ (125), les gaz d'échappement provenant de la pile à combustible à méthanol direct (106) et/ou de l'ensemble turbogénérateur (TGA) servent à la production d'eau déminéralisée et de CO₂.

7. Installation à opérationnalité rapide selon la revendication 6, **caractérisée par le fait que** le réservoir d'eau (124a) forme une unité avec le réservoir de méthanol (124b).

8. Installation à opérationnalité rapide selon la revendication 6, **caractérisée par le fait que** le système de liquéfaction du CO₂ comprend un séparateur de CO₂ (118), un régulateur de pression des gaz d'échappement avec une vanne de régulation de pression (123a), un compresseur de CO₂ (411c) en aval du séparateur de CO₂ (123c), un compresseur de CO₂ de la pompe à chaleur au CO₂ (123d), une vanne de détente de CO₂ (123e) de la pompe à chaleur, une alimentation en CO₂ liquide (123f) dans le circuit de refroidissement, une évacuation du CO₂ liquide (123g) du circuit de refroidissement, une pompe à CO₂ liquide (123h), un réservoir de CO₂ (125), un évaporateur de pompe à chaleur (108) et un condenseur de pompe à chaleur d'installation à pile à combustible à méthanol direct (111) et/ou un condenseur de pompe à chaleur d'ensemble turbogénérateur (122) ; le compresseur de CO₂ (123d) de la pompe à chaleur et la vanne de détente de CO₂ (123e) de la pompe à chaleur sont disposés entre l'évaporateur (108) et le condenseur de pompe à chaleur de l'installation à pile à combustible à méthanol direct (111) et/ou le condenseur de pompe à chaleur de l'ensemble turbogénérateur (122) et via un circuit de refroidissement de CO₂ ; le séparateur de CO₂ (118) est conçu pour introduire du CO₂ gazeux dans le circuit de refroidissement en amont du compresseur de CO₂ (123d) et pour évacuer le CO₂ liquide du circuit de refroidissement dans le réservoir de CO₂ (125) en aval du condenseur de la pompe à chaleur de l'installation à pile à combustible à méthanol direct (111) et/ou du condenseur de la pompe à chaleur de l'ensemble turbogénérateur (122).
